(19) Europäisches Patentamt
European Patent Office
Office européen des brevets

(11) Veröffentlichungsnummer: **0 169 459 B1**

(12) **EUROPÄISCHE PATENTSCHRIFT**

(45) Veröffentlichungstag der Patentschrift: **15.05.91**

(51) Int. Cl.⁵: **C09B 29/045**, D06P 1/18

(21) Anmeldenummer: **85108704.9**

(22) Anmeldetag: **12.07.85**

Die Akte enthält technische Angaben, die nach dem Eingang der Anmeldung eingereicht wurden und die nicht in dieser Patentschrift enthalten sind.

# (54) Azofarbstoffe.

(30) Priorität: **24.07.84 DE 3427237**

(43) Veröffentlichungstag der Anmeldung:
**29.01.86 Patentblatt 86/05**

(45) Bekanntmachung des Hinweises auf die Patenterteilung:
**15.05.91 Patentblatt 91/20**

(84) Benannte Vertragsstaaten:
**CH DE FR GB LI**

(56) Entgegenhaltungen:
**CH-A- 448 320**
**FR-A- 1 406 200**

(73) Patentinhaber: **BAYER AG**
**W-5090 Leverkusen 1 Bayerwerk(DE)**

(72) Erfinder: **Hamprecht, Rainer, Dr.**
**Im Kerberich 25**
**W-5068 Odenthal(DE)**

**EP 0 169 459 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft neue anwendungstechnisch besonders wertvolle Azofarbstoffe sowie deren Verwendung zum Färben organischer Materialien.

Die neuen Azofarbstoffe entsprechen der Formel

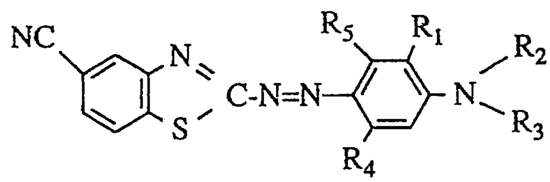

(I)

worin

- $R_1$ Wasserstoff, Halogen, Alkyl, Alkoxy, Alkoxyalky oder Aryloxy,
- $R_2$ Alkenyl oder gegebenenfalls durch OH, Halogen, CN, $CO_2$-Alkyl, Aryl, Cycloalkyl, Alkoxy, Aryloxy, OCO-Alkyl, OCO-Aryl, OCONH-Alkyl oder $OCO_2$-Alkyl substituiertes Alkyl
- $R_3$ Wasserstoff oder gleiches oder verschiedenes $R_2$,
- $R_4$ Wasserstoff, Alkyl, Alkenyl, Cycloalkyl, Aralkyl, Alkoxy, Halogen, $CF_3$, NHCO-Alkyl, NHCO-Aryl, $NHCO_2$-Alkyl, NHCHO, $NHSO_2$-Alkyl, $NHCONH_2$, $NHSO_2$-Aryl, $NHSO_2$-Alkenyl, NHCONH-Alkyl oder $NHCON(Alkyl)_2$ und
- $R_5$ Wasserstoff, Alkyl oder Alkoxy bedeuten,

wobei die genannten Kohlenwasserstoffreste durch weitere in der Chemie der Azofarbstoffe übliche Substituenten substituiert sein können.

Während die isomeren 6-Cyanobenzthiazol-Derivate in der Literatur relativ häufig beschrieben worden sind (vgl. US-A-3084,153), gibt es nur eine Publikation, worin das 5-Cyano-2-aminobenzthiazol als Diazokomponente erwähnt wird (vgl. GB 1 185 174, Seite 2) und zwar zur Herstellung spezieller Azofarbstoffe mit einer Diphenylaminkupplungskomponente. Es fehlen jedoch konkrete Farbstoffbeispiele sowie Angaben über die Herstellung und Eigenschaften des 5-Cyano-2-amino-benzthiazols. Auch wurde nicht erkannt, daß Azofarbstoffe, die sich von dieser Verbindung ableiten, generell hervorragende färberische Eigenschaften aufweisen. Das gilt insbesondere für Dispersionsfarbstoff-Typen, d.h. also solche Farbstoffe der Formel (I), die keine wasserlöslich machenden Gruppen enthalten, aber auch für wasserlösliche Farbstoffe, die mindestens einen Rest der Formel $-SO_3H$, $-OSO_3H$ oder $SSO_3H$ enthalten.

Unter den vorstehend im beliebigen Zusammenhang genannten Alkylresten wurden vorzugsweise solche mit 1 bis 8, insbesondere 1 bis 4 C-Atomen verstanden. Besonders bevorzugt sind Methyl, Ethyl und Methoxy.

Geeignete Aryl- und Aryloxyreste sind vor allem Phenyl- und Phenoxyreste, die durch $C_1$-$C_4$-Alkyl, Halogen, $CO_2$-$C_1$-$C_4$-Alkyl, $NO_2$, $COCH_3$, $C_1$-$C_4$-Alkoxy oder CN substituiert sein können.

Geeignete Aralkylreste sind Phenyl-$C_1$-$C_3$-alkylreste, die - ebenso wie die Arylreste eine Sulfogruppe enthalten können.

Geeignete Cycloalkylreste sind Cyclohexylreste.

Die genannten Alkenylreste haben vorzugsweise 3 bis 6 C-Atome.

Unter "Halogen" wird insbesondere Br und Cl verstanden.

Bevorzugte Farbstoffe sind solche der Formel (I), worin

- $R_1$ Wasserstoff, Alkyl, Alkoxy oder Cl,
- $R_2$ Alkenyl oder gegebenenfalls durch Cl, CN, $CO_2$-Alkyl, Aryl, Alkoxy, OCO-Alkyl, $OCO_2$-Alkyl oder OCO-Aryl substituiertes Alkyl,
- $R_3$ Wasserstoff oder gleiches oder verschiedenes bevorzugtes $R_2$,
- $R_4$ Wasserstoff, Alkyl, Alkoxy, Cl oder - insbesondere - NHCO-Alkyl, NHCO-Phenyl, $NHCO_2$-Alkyl, $NHSO_2$-Alkyl oder $NHSO_2$-Aryl und
- $R_5$ Wasserstoff bedeuten,

wobei die genannten Alkyl-, Alkoxy-, Alkenyl- und Arylreste beispielsweise die oben angegebenen C-Zahlen und Substitutionsmuster aufweisen.

Besonders bevorzugt sind Farbstoffe der Formel (I), worin

- $R_1$ H, $C_1$-$C_2$-Alkoxy, $CH_3$ oder Cl,

$R_2$ $C_3$-$C_6$-Alkenyl oder gegebenenfalls durch OH, Cl, CN, $CO_2$-$C_1$-$C_2$-Alkyl, Phenyl, Tolyl, Chlorphenyl, $C_1$-$C_4$Alkoxy, OCO-$C_1$-$C_4$-Alkyl, OCO-Phenyl, OCO-Tolyl oder OCO-Chlorphenyl substituiertes $C_1$-$C_6$-Alkyl,

$R_3$ H oder gegebenenfalls durch CN, $CO_2$-$C_1$-$C_2$-Alkyl, Phenyl, Tolyl, Chlorphenyl, $C_1$-$C_4$-Alkoxy, OCO-$C_1$-$C_4$-Alkyl, OCO-Phenyl, OCO-Tolyl oder OCO-Chlorphenyl substituiertes $C_1$-$C_6$-Alkyl,

$R_4$ H, $CH_3$ oder - insbesondere - NHCO-$C_1$-$C_4$-Alkyl, NHCO-Phenyl, NHCO-Tolyl, NHCO-Chlorphenyl, $NHSO_2$-$C_1$-$C_4$-Alkyl, $NHSO_2$-$CH_2Cl$, $NHCO_2$-$C_1$-$C_4$-Alkyl, $NHSO_2$-Phenyl, $NHSO_2$-Tolyl oder $NHSO_2$-Chlorphenyl und

$R_5$ H bedeuten.

Ganz besonders bevorzugt sind Farbstoffe der Formel (I), worin

$R_1$ H oder Cl,

$R_2$ gegebenenfalls durch CN, $CO_2$-$C_1$-$C_2$-Alkyl, Phenyl, Tolyl, Chlorphenyl, $C_1$-$C_4$-Alkoxy, OCO-$C_1$-$C_4$-Alkyl oder OCO-Phenyl substituiertes $C_1$-$C_4$-Alkyl,

$R_3$ H oder gegebenenfalls durch CN, $CO_2$-Alkyl, Phenyl, Tolyl, Chlorphenyl, $C_1$-$C_4$-Alkoxy oder OCO-$C_1$-$C_4$-Alkyl substituiertes $C_1$-$C_4$-Alkyl,

$R_4$ $CH_3$, NHCO-$C_1$-$C_4$ -Alkyl, NH-Benzoyl oder $NHSO_2$-$C_1$-$C_4$-Alkyl und

$R_5$ H bedeuten.

Darunter sind wiederum solche Farbstoffe bevorzugt, bei denen

$R_2$ durch CN, $CO_2$-$C_1$-$C_4$-Alkyl, $C_1$-$C_4$-Alkoxy oder OCO-$C_1$-$C_4$-Alkyl substituiertes $C_1$-$C_4$-Alkyl,

$R_3$ H oder gegebenenfalls durch CN, $CO_2$-Cl-$C_4$-Alkyl, $C_1$-$C_4$-Alkoxy oder OCO-$C_1$-$C_4$-Alkyl substituiertes Alkyl

bedeuten, und die übrigen Reste wie vorstehend definiert sind.

Die neuen Farbstoffe erhält man z.B. dadurch, daß man diazotiertes 2-Amino-5-cyano-benzthiazol auf Kupplungskomponenten der Formel

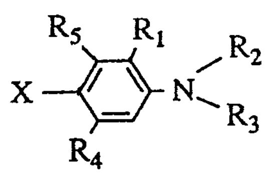

(II)

worin

X für H oder eine Abgangsgruppe, z.B. COOH, $CH_2OH$ oder $SO_3H$, steht und

$R_1$ $R_2$, $R_3$, $R_4$ und $R_5$ die obengenannte Bedeutung haben, in an sich bekannter Weise kuppelt.

So ist etwa die Kupplung mit Verbindungen, welche eine Abgangsgruppe enthalten, in GB 2 036 775 beschrieben.

Das 2-Amino-5-cyano-benthiazol ist - abgesehen von der Erwähnung in der obengenannten Patentpublikation als geeignete Diazokomponente - bislang nicht beschrieben worden.

Man erhält diese Verbindung nach einem erfindungsgemäßen Verfahren dadurch, daß man Verbindungen der Formel

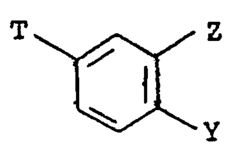

worin

Y für SH, SCN,

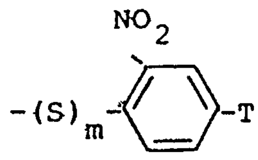, 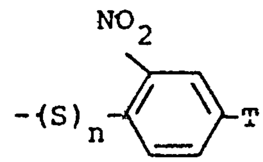

oder
Halogen
(vorzugsweise Cl)

Z für $NH_2$ oder vorzugsweise für $NO_2$,
T für $CONH_2$ oder vorzugsweise für CN und
n für 2 oder vorzugsweise für 1 stehen,

mit Thioharnstoff oder Thioharnstoffbildnern bei 60° bis 200°C gegebenenfalls in Gegenwart eines indifferenten Lösungsmittels umsetzt und - im Falle von T = $CONH_2$ - anschließend diese Gruppe zu einer Nitrilgruppe dehydratisiert.

Geeignete Lösungsmittel sind insbesondere im genannten Temperaturbereich siedende Alkohole und vor allem Pyridin.

Die neuen Farbstoffe eignen sich hervorragend zum Färben und Bedrucken von Textilfasermaterialien, wobei die wasserunlöslichen Typen naturgemäß zum Färben von hydrophoben Fasern wie Celluloseester, Polyester oder Mischungen dieser Materialien mit natürlichen Fasermaterialien sowie zum Färben von organischen Lösungsmitteln, Mineralölprodukten, Wachsen, Kunststoffen und Oberflächenbelägen eingesetzt werden.

Auf den bevorzugten Polyesterfasern erhält man mit den neuen Farbstoffen farbstarke brillante gelbe bis violette Färbungen und Drucke mit sehr guten Echtheitseigenschaften und gutem Auszieh- und Egalisiervermögen.

Die wasserlöslichen Farbstoffe, d.h. die in Form der freien Säure mindestens einen Rest der Formel $-SO_3H$, $-OSO_3H$ oder $SSO_3H$ enthalten, eignen sich sehr gut zum Färben von natürlichen und synthetischen Polyamidfasern, die im letztgenannten Falle in klaren orangefarbenen bis blaustichig roten Nuancen mit guten Echtheiten gefärbt werden.

Selbstverständlich können diese Farbstoffe auch in Form ihrer Salze, insbesondere ihrer Alkali- und Ammoniumsalze eingesetzt werden.

Bevorzugt sind solche Typen, die eine Sulfogruppe enthalten, die sich insbesondere in den Resten $R_2/R_3$ der Formel (I) befindet.

Besonders bevorzugte Säurefarbstoffe sind Farbstoffe der Formel (I), worin

$R_2$ für H oder einen vorzugsweise unsubstituierten Alkylrest,
$R_3$ für einen durch $-SO_3H$, $-OSO_3H$ oder Sulfoaryl substituierten Alkylrest stehen,

wobei die übrigen Reste die obengenannten speziellen oder allgemeinen Bedeutungen haben.

Ganz besonders bevorzugt sind solche sauren Farbstoffe der Formel (I), worin

$R_2$ für $C_2$-$C_4$-Alkyl und
$R_3$ für $C_2H_4\ SO_3H$, $C_2H_4OSO_3H$,

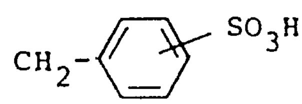

oder

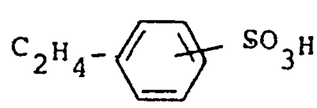

stehen
und die übrigen Reste die obengenannten bevorzugten Bedeutungen haben.

Beispiel 1 Herstellung des Farbstoffs der Formel

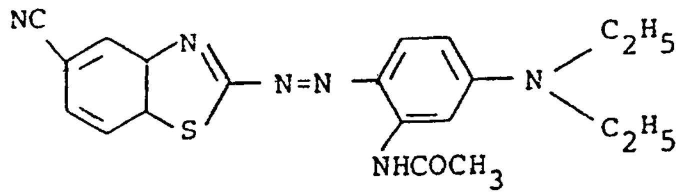

a) 103,9 g 4-Chlor-3-nitrobenzoesäureamid werden in ein Gemisch von 300 ml Phosphoroxychlorid und 40,2 ml Pyridin eingetragen. Durch Außenkühlung hält man dabei die Temperatur auf 50 °C. Man rührt weitere zwei Stunden bei 50 °C, läßt abkühlen und klärt die Lösung über eine Glasfilternutsche. Das Filtrat wird langsam in 3 l Eiswasser eingerührt. Man saugt die kristalline Fällung ab, wäscht und trocknet im Vakuum. Man erhält 86 g rohes 4-Chlor-3-nitrobenzonitril.

b) In eine siedende Lösung von 243 g Thioharnstoff in 600 ml Pyridin trägt man langsam 146 g 4-Chlor-3-nitrobenzonitril ein und erwärmt das Gemisch noch weitere 5 Stunden zum Sieden. Nach Erkalten trägt man auf 4,0 l Wasser aus, saugt ab, wäscht mit Wasser nach und verrührt das Rohprodukt über Nacht mit 200 ml 18 %iger Natriumhydrogensulfidlösung und 2,0 l Wasser. Man saugt ab, wäscht mit Wasser und trocknet.

Ausbeute: 115 g; Massenspektrum $m_e$ + : 175 (100 %); IR: 2232 $cm^{-1}$ (C≡N); Fp.: 256-258 ° Zers.

c) 5 g 2-Amino-5-cyanbenzthiazol werden in einer Mischung von 35 ml Eisessig, 10 ml Wasser und 15 ml konzentrierter Schwefelsäure (66 °Bé) angerührt. Bei 0 bis 5 °C tropft man in 30 Minuten 5 ml 40 %ige Nitrosylschwefelsäure zu und rührt noch weitere 2 Stunden bei 0-5 °C. Man läßt die Lösung der Diazokomponente zu einer Lösung von 6,4 g 3-Diethylaminoacetanilid und 1 g Harnstoff in 100 ml Wasser und 10 ml 30 %iger Salzsäure bei 0 °C zulaufen, rührt eine Stunde bei 0 °C und verdünnt dann mit 500 ml Eiswasser. Man saugt ab, wäscht mit 200 ml Wasser nach und trocknet. Ausbeute 7,4 g. Der Farbstoff färbt Polyesterfasern in einem farbstarken, klaren Rubin mit sehr guten Echtheiten.

Bei analoger oder ähnlicher Arbeitsweise können die in nachfolgender Tabelle aufgeführten Farbstoffe in guter Ausbeute erhalten werden:

Farbstoffe der Formel

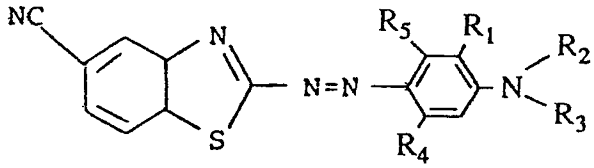

| Beispiel Nr. | 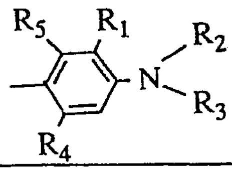 | Nuance auf Polyester |
|---|---|---|
| 2 | 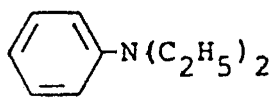 | blaust. Rot |
| 3 | 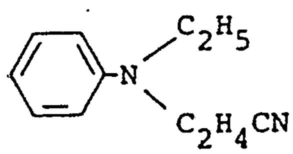 | gelbst. Scharlach |
| 4 | 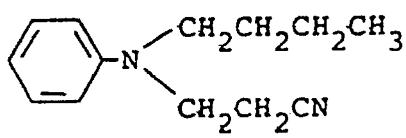 | gelbst. Scharlach |
| 5 | 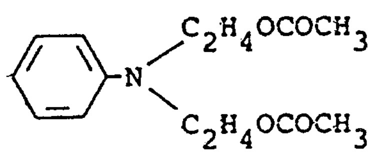 | Rot |
| 6 | 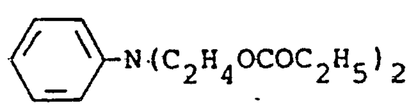 | Rot |
| 7 | 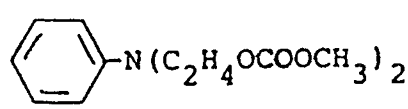 | Rot |

| Beispiel Nr. | 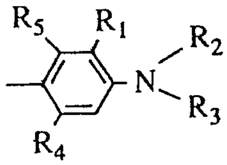 | Nuance auf Polyester |
|---|---|---|
| 8 | 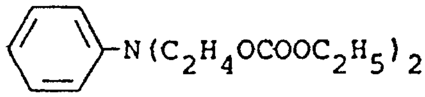 | Rot |
| 9 | 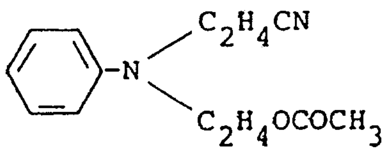 | gelbst. Scharlach |
| 10 | 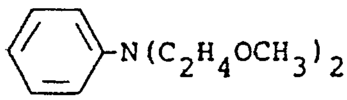 | Rot |
| 11 | 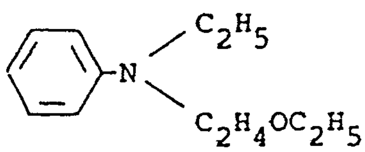 | blaust. Rot |
| 12 | 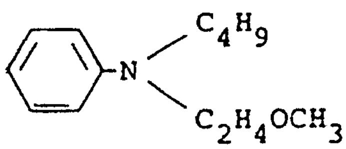 | blaust. Rot |
| 13 | 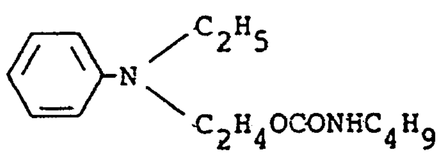 | Rot |
| 14 | 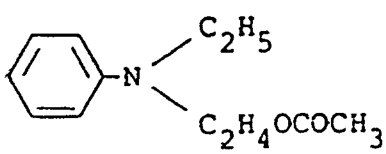 | Rot |
| 15 | 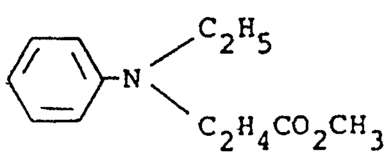 | Scharlach |

| Beispiel Nr. | 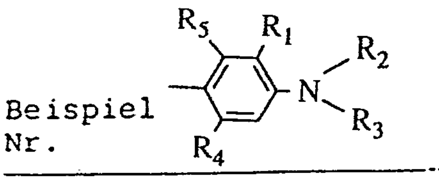 | Nuance auf Polyester |
|---|---|---|
| 16 | 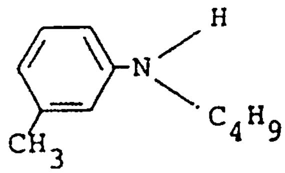 | gelbst. Rot |
| 17 | 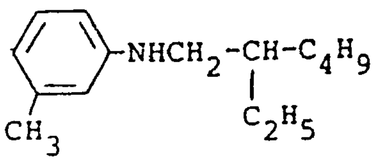 | gelbst. Rot |
| 18 | 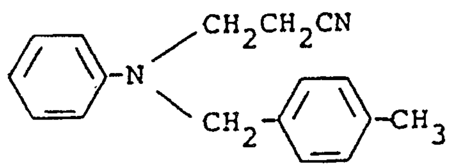 | Rot |
| 19 | 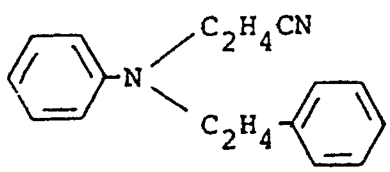 | Rot |
| 20 | 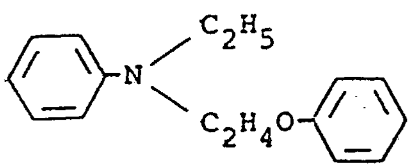 | Rot |
| 21 | 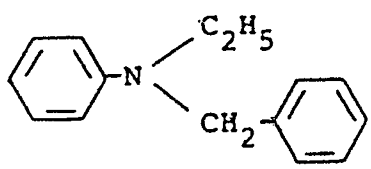 | Rot |
| 22 | 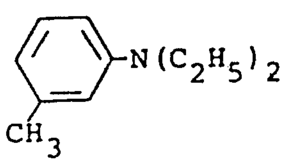 | Rot |

| Beispiel Nr. | 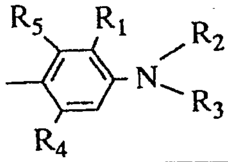 | Nuance auf Polyester |
|---|---|---|
| 23 | 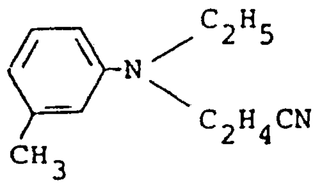 | Rot |
| 24 | 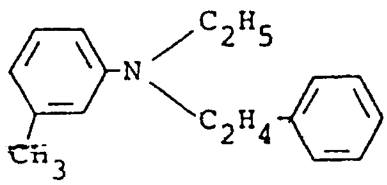 | Rot |
| 25 | 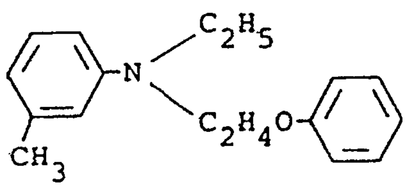 | Rot |
| 26 | 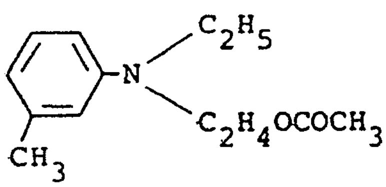 | Rot |
| 27 | 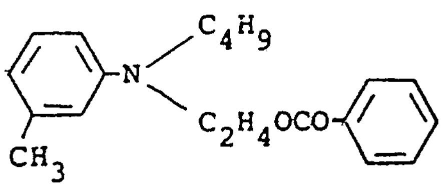 | Rot |
| 28 | 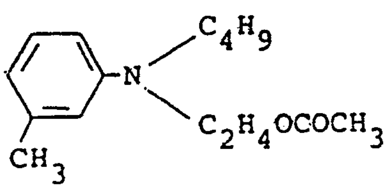 | Rot |
| 29 | 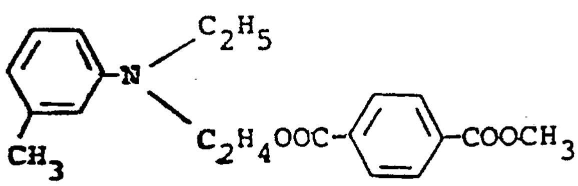 | Rot |

| Beispiel Nr. | 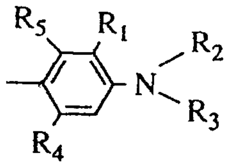 | Nuance auf Polyester |
|---|---|---|
| 30 | 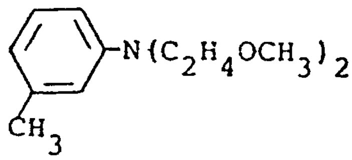 | Rot |
| 31 | 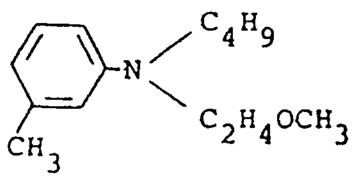 | Rot |
| 32 | 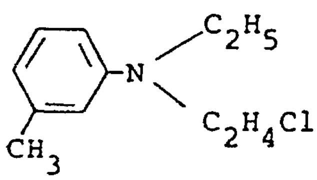 | Rot |
| 33 | 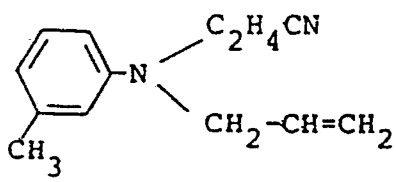 | Rot |
| 34 | 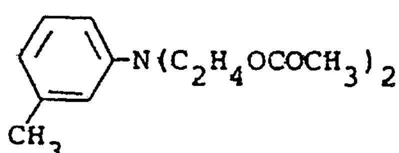 | Rot |
| 35 | 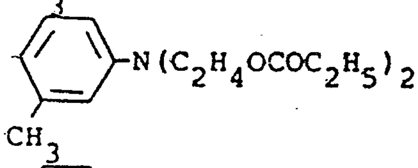 | Rot |
| 36 | 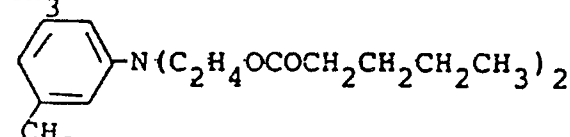 | Rot |
| 37 | 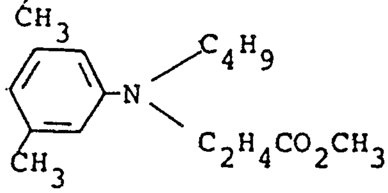 | Rot |

| Beispiel Nr. | 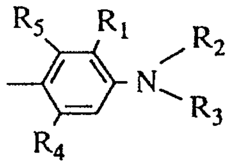 | Nuance auf Polyester |
|---|---|---|
| 38 | 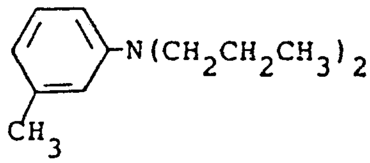 | Rot |
| 39 | 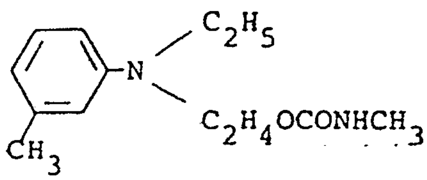 | Rot |
| 40 | 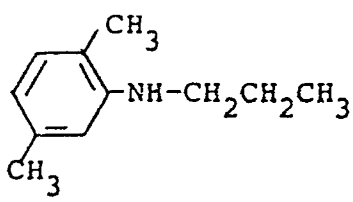 | Rot |
| 41 | 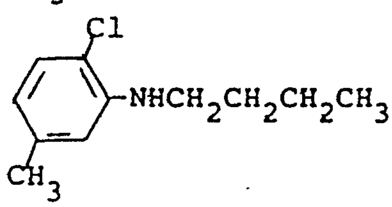 | Scharlach |
| 42 | 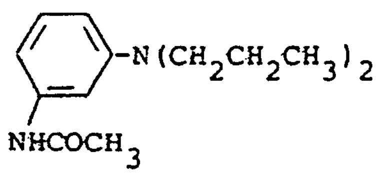 | Rubin |
| 43 | 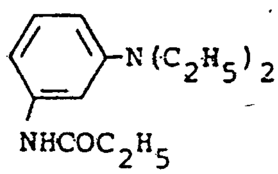 | Rubin |
| 44 | 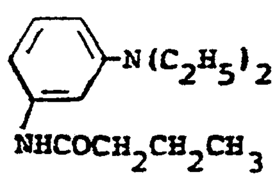 | Rubin |

| Beispiel Nr. | 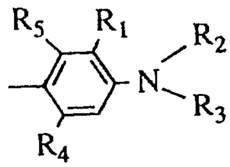 | Nuance auf Polyester |
|---|---|---|
| 45 | 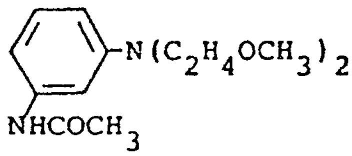 | Rubin |
| 46 | 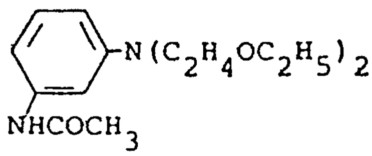 | Rubin |
| 47 | 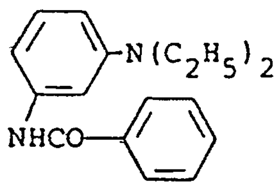 | Rubin |
| 48 | 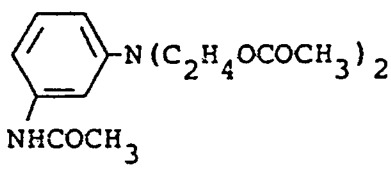 | Rubin |
| 49 | 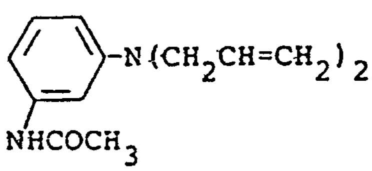 | Rubin |
| 50 | 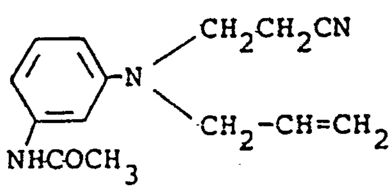 | Rot |
| 51 | 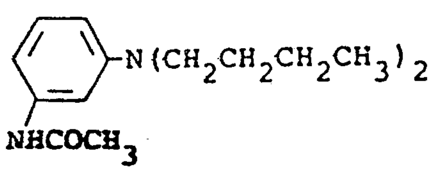 | Rubin |

| Beispiel Nr. | 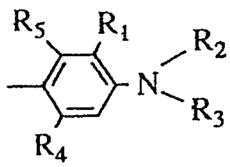 | Nuance auf Polyester |
|---|---|---|
| 52 | 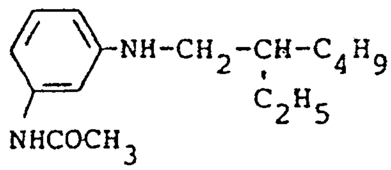 | Rot |
| 53 | 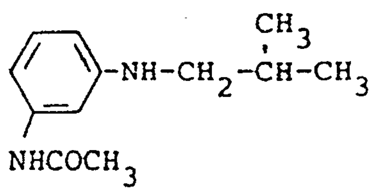 | Rot |
| 54 | 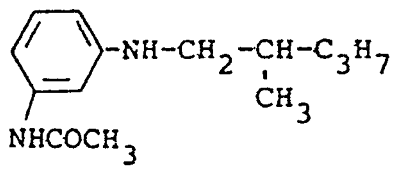 | Rot |
| 55 | 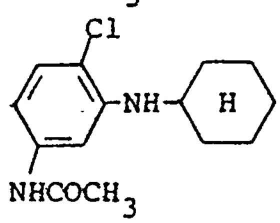 | Rot |
| 56 | 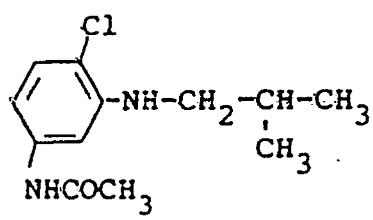 | Rot |
| 57 | 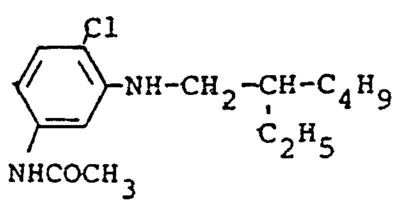 | Rot |

| Beispiel Nr. | 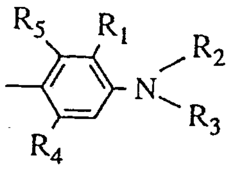 | Nuance auf Polyester |
|---|---|---|
| 58 | 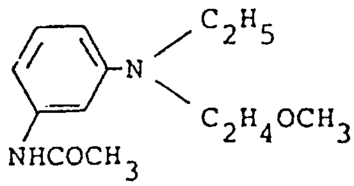 | Rubin |
| 59 | 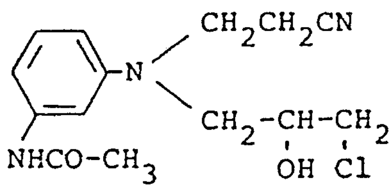 | Rot |
| 60 | 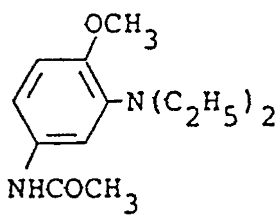 | Violett |
| 61 | 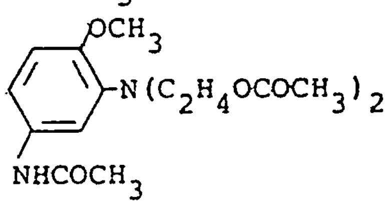 | Violett |
| 62 | 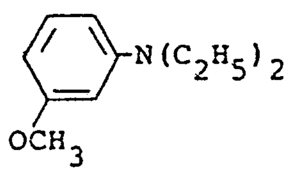 | Rot |
| 63 | 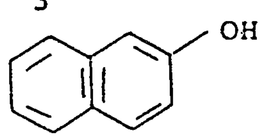 | Orange |
| 64 | 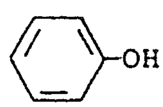 | Goldgelb |

| Beispiel Nr. | 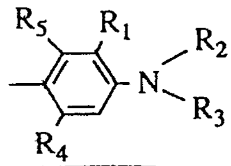 | Nuance auf Polyester |
|---|---|---|
| 65 | 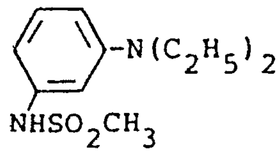 | Rot |
| 66 | 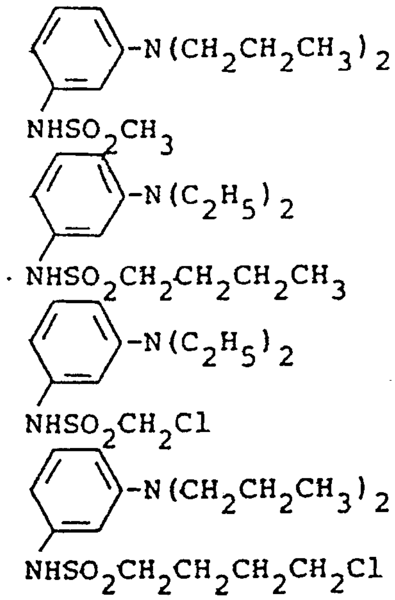 | Rot |
| 67 | | Rot |
| 68 | | Rot |
| 69 | | Rot |
| 70 | 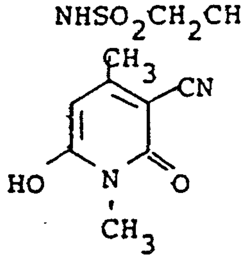 | Gelb |
| 71 | 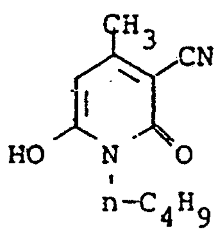 | Gelb |
| 72 | 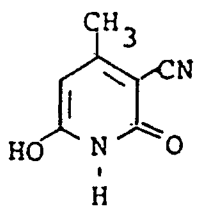 | Gelb |

| Beispiel Nr. | 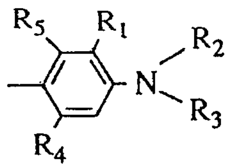 | Nuance auf Polyester |
|---|---|---|
| 73 | 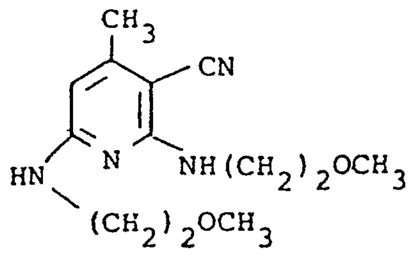 | Scharlach |
| 74 | 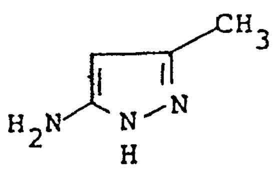 | Gelb |
| 75 | 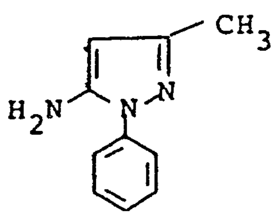 | Gelb |
| 76 | 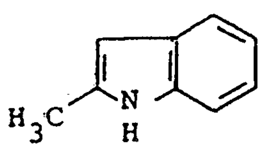 | Gelb |
| 77 | 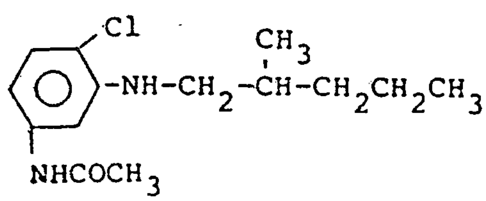 | Rot |
| 78 | 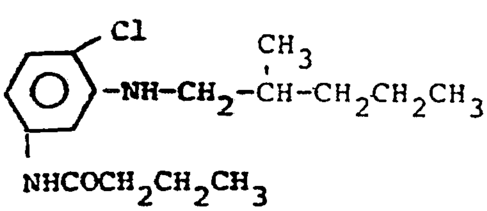 | Rot |

| Beispiel Nr. | 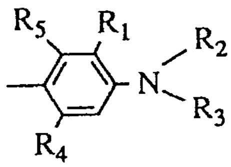 | Nuance auf Polyamid |
|---|---|---|
| 79 | 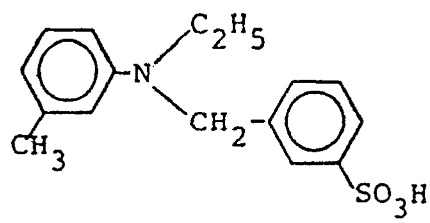 | blaustichig Rot |
| 80 | 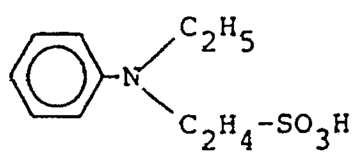 | blaustichig Rot |
| 81 | 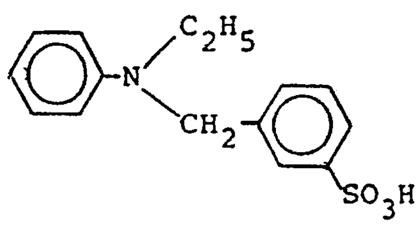 | Rot |
| 82 | 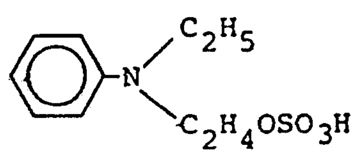 | blaust. Rot |
| 83 | 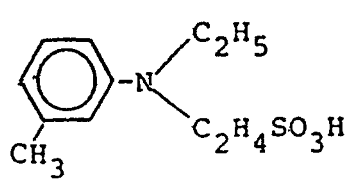 | stark blaust. Rot |
| 84 | 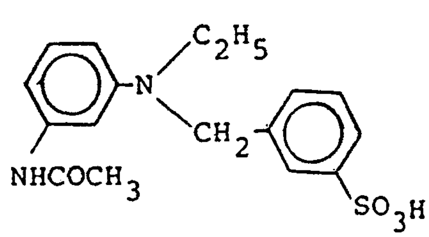 | blaust. Rot |

**Ansprüche**

1. Azofarbstoffe der Formel

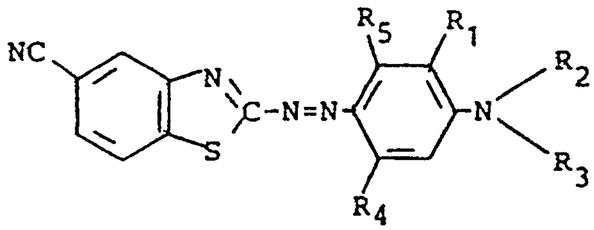

(I)

worin

$R_1$ Wasserstoff, Halogen, Alkyl, Alkoxy, Alkoxyalkyl oder Aryloxy,

$R_2$ Alkenyl oder gegebenenfalls durch OH, Halogen, CN, $CO_2$-Alkyl, Aryl, Cycloalkyl, Alkoxy, Aryloxy, OCO-Alkyl, OCO-Aryl, OCONH-Alkyl oder $OCO_2$-Alkyl sübstituiertes Alkyl

$R_3$ Wasserstoff oder gleiches oder verschiedenes $R_2$,

$R_4$ Wasserstoff, Alkyl, Alkenyl, Cycloalkyl, Aralkyl, Alkoxy, Halogen, $CF_3$, NHCO-Alkyl, NHCO-Aryl, $NHCO_2$-Alkyl, NHCHO, $NHSO_2$-Alkyl, $NHCONH_2$, $NHSO_2$-Aryl, $NHSO_2$-Alkenyl, NHCONH-Alkyl oder $NHCON(Alkyl)_2$ und

$R_5$ Wasserstoff, Alkyl oder Alkoxy bedeuten,

wobei die genannten Kohlenwasserstoffreste durch weitere in der Chemie der Azofarbstoffe übliche Substituenten substituiert sein können.

2. Azofarbstoffe gemäß Anspruch 1, worin

$R_1$ Wasserstoff, Alkyl, Alkoxy oder Cl,

$R_2$ Alkenyl oder gegebenenfalls durch Cl, CN, $CO_2$-Alkyl, Aryl, Alkoxy, OCO-Alkyl, $OCO_2$-Alkyl oder OCO-Aryl substituiertes Alkyl,

$R_3$ Wasserstoff oder gleiches oder verschiedenes bevorzugtes $R_2$,

$R_4$ Wasserstoff, Alkyl, Alkoxy, Cl oder - insbesondere - NHCO-Alkyl, NHCO-Phenyl, $NHCO_2$-Alkyl, $NHSO_2$-Alkyl oder $NHSO_2$-Aryl und

$R_5$ Wasserstoff bedeuten.

3. Azofarbstoffe gemäß Anspruch 1, worin

$R_1$ H, $C_1$-$C_2$-Alkoxy, $CH_3$ oder Cl,

$R_2$ $C_3$-$C_6$-Alkenyl oder gegebenenfalls durch OH, Cl, CN, $CO_2$-$C_1$-$C_2$-Alkyl, Phenyl, Tolyl, Chlorphenyl, $C_1$-$C_4$-Alkoxy, OCO-$C_1$-$C_4$-Alkyl, OCO-Phenyl, OCO-Tolyl oder OCO-Chlorphenyl substituiertes $C_1$-$C_6$-Alkyl,

$R_3$ H oder $C_3$-$C_6$-Alkenyl oder gegebenenfalls durch CN, $CO_2$-$C_1$-$C_2$-Alkyl, Phenyl, Tolyl, Chlorphenyl, $C_1$-$C_4$-Alkoxy, OCO-$C_1$-$C_4$-Alkyl, OCO-Phenyl, OCO-Tolyl oder OCO-Chlorphenyl substituiertes $C_1$-$C_6$-Alkyl,

$R_4$ H, $CH_3$ oder - insbesondere NHCO-$C_1$-$C_4$-Alkyl, NHCO-Phenyl, NHCO-Tolyl, NHCO-Chlorphenyl, $NHSO_2$-$C_1$-$C_4$-Alkyl, $NHSO_2$-$CH_2Cl$, $NHCO_2$- $C_1$-$C_4$-Alkyl, $NHSO_2$-Phenyl, $NHSO_2$-Tolyl oder $NHSO_2$-Chlorphenyl

$R_5$ H bedeuten.

4. Azofarbstoffe gemäß Anspruch 1, worin

$R_1$ H oder Cl,

$R_2$ gegebenenfalls durch CN, $CO_2$-$C_1$-$C_2$-Alkyl, Phenyl, Tolyl, Chlorphenyl, $C_1$-$C_4$-Alkoxy, OCO-$C_1$-$C_4$-Alkyl oder OCO-Phenyl substituiertes $C_1$-$C_4$-Alkyl

$R_3$ H oder gegebenenfalls durch CN, $CO_2$-Alkyl, Phenyl, Tolyl, Chlorphenyl, $C_1$-$C_4$-Alkoxy oder OCO-$C_1$-$C_4$-Alkyl substituiertes $C_1$-$C_4$-Alkyl

$R_4$ $CH_3$, NHCO-$C_1$-$C_4$-Alkyl, NH-Benzoyl oder $NHSO_2$-$C_1$-$C_4$-Alkyl und

$R_5$ H bedeuten.

5. Azofarbstoffe gemäß Ansprüche 1 - 4 , dadurch gekennzeichnet, daß diese frei von wasserlöslich machenden Gruppen sind.

6. Azofarbstoff gemäß Anspruch 1 der Formel

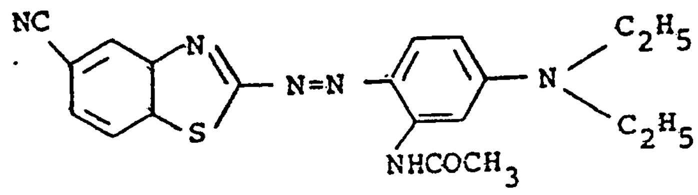

7. Azofarbstoffe gemäß Ansprüche 1 - 4 , dadurch gekennzeichnet, daß diese in der Säureform mindestens eine wasserlöslich machende Gruppe, vorzugsweise in den Substituenten $R_2$ und $R_3$, insbesondere eine Gruppe der Formeln $-OSO_3H$- $-SSO_3H$ und vorzugsweise $-SO_3H$ enthalten.

8. Verfahren zum Färben von organischen Materialien, dadurch gekennzeichnet. daß man Farbstoffe gemäß Anspruch 1 verwendet.

**Claims**

1. Azo dyestuffs of the formula

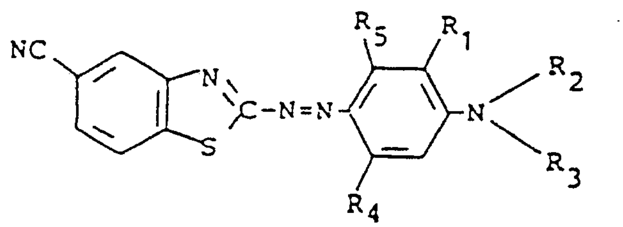

(I)

wherein
$R_1$ denotes hydrogen, halogen, alkyl, alkoxy, alkoxyalkyl or aryloxy,
$R_2$ denotes alkenyl, or alkyl which is optionally substituted by OH, halogen, CN, $CO_2$-alkyl, aryl, cycloalkyl, alkoxy, aryloxy, OCO-alkyl, OCO-aryl, OCONH-alkyl or $OCO_2$-alkyl,
$R_3$ denotes hydrogen or identical or different $R_2$,
$R_4$ denotes hydrogen, alkyl, alkenyl, cycloalkyl, aralkyl, alkoxy, halogen, $CF_3$, NHCO-alkyl, NHCO-aryl, $NHCO_2$-alkyl, NHCHO, $NHSO_2$-alkyl, $NHCONH_2$, $NHSO_2$-aryl, $NHSO_2$-alkenyl, NHCONH-alkyl or $NHCON(alkyl)_2$
and
$R_5$ denotes hydrogen, alkyl or alkoxy, where the hydrocarbon radicals mentioned can be substituted by further substituents customary in the chemistry of azo dyestuffs.

2. Azo dyestuffs according to Claim 1,
wherein
$R_1$ denotes hydrogen, alkyl, alkoxy or Cl,
$R_2$ denotes alkenyl, or alkyl which is optionally substituted by Cl, CN, $CO_2$-alkyl, aryl, alkoxy, OCO-alkyl, $OCO_2$-alkyl or OCO-aryl,
$R_3$ denotes hydrogen or identical or different preferred $R_2$,
$R_4$ denctes hydrogen, alkyl, alkoxy, Cl or - in particular - NHCO-alkyl, NHCO-phenyl, $NHCO_2$-alkyl, $NHSO_2$-alkyl or $NHSO_2$-aryl and
$R_5$ denotes hydrogen.

3. Azo dyestuffs according to Claim 1,

wherein

$R_1$ denotes H, $C_1$-$C_2$-alkoxy, $CH_3$ or Cl,

$R_2$ denotes $C_3$-$C_6$-alkenyl, or $C_1$-$C_6$-alkyl which is optionally substituted by OH, Cl, CN, $CO_2$-$C_1$-$C_2$-alkyl, phenyl, tolyl, chlorophenyl, $C_1$-$C_4$-alkoxy, OCO-$C_1$-$C_4$-alkyl, OCO-phenyl, OCO-tolyl or OCO-chlorophenyl,

$R_3$ denotes H or $C_3$-$C_6$-alkenyl, or $C_1$-$C_6$-alkyl which is optionally substituted by CN, $CO_2$-$C_1$-$C_2$-alkyl, phenyl, tolyl, chlorophenyl, $C_1$-$C_4$-alkoxy, OCO-$C_1$-$C_4$-alkyl, OCO-phenyl, OCO-tolyl or OCO-chlorophenyl,

$R_4$ denotes H, $CH_3$ or - in particular - NHCO-$C_1$-$C_4$-alkyl, NHCO-phenyl, NHCO-tolyl, NHCO-chlorophenyl, $NHSO_2$-$C_1$-$C_4$-alkyl, $NHSO_2$-$CH_2Cl$, $NHCO_2$-$C_1$-$C_4$-alkyl, $NHSO_2$-phenyl, $NHSO_2$-tolyl or $NHSO_2$-chlorophenyl,

$R_5$ denotes H.

4. Azo dyestuffs according to Claim 1,

wherein

$R_1$ denotes H or Cl,

$R_2$ denotes $C_1$-$C_4$-alkyl which is optionally substituted by CN, $CO_2$-$C_1$-$C_2$-alkyl, phenyl, tolyl, chlorophenyl, $C_1$-$C_4$-alkoxy, OCO-$C_1$-$C_4$-alkyl or OCO-phenyl,

$R_3$ denotes H or $C_1$-$C_4$-alkyl which is optionally substituted by CN, $CO_2$-alkyl, phenyl, tolyl, chlorophenyl, $C_1$-$C_4$-alkoxy or OCO-$C_1$-$C_4$-alkyl,

$R_4$ denotes $CH_3$, NHCO-$C_1$-$C_4$-alkyl, NH-benzoyl or $NHSO_2$-$C_1$-$C_4$-alkyl and

$R_5$ denotes H.

5. Azo dyestuffs according to Claims 1 - 4, characterised in that they are free of water-solubilising groups.

6. Azo dyestuff according to Claim 1 of the formula

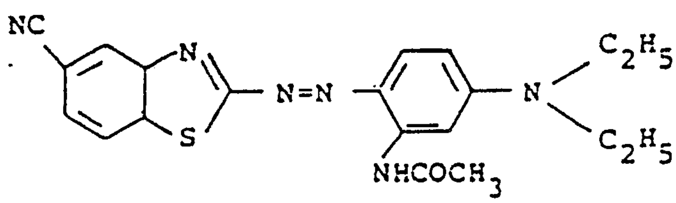

7. Azo dyestuffs according to Claims 1 - 4, characterised in that in the acid form they contain at least one water-solubilising group, preferably in the substituents $R_2$ and $R_3$, in particular a group of the formula $-OSO_3H$, $-SSO_3H$ or preferably $-SO_3H$.

8. Process for dyeing organic materials, characterised in that dyestuffs according to Claim 1 are used.

## Revendications

1. Colorants azoïques de formule

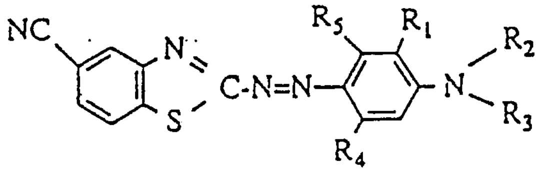

(I)

dans laquelle

$R_1$ représente un atome d'hydrogène ou d'halogène ou un groupe alkyle, alcoxy, alcoxyalkyle ou aryloxy,

$R_2$ représente un groupe alcényle ou un groupe alkyle éventuellement substitué par OH, halogène, CN, $CO_2$-alkyle, aryle, cycloalkyle, alcoxy, aryloxy, OCO-alkyle, OCO-aryle, OCONH-alkyle ou $OCO_2$-alkyle,

$R_3$ représente l'hydrogène ou un groupe $R_2$ identique ou différent,

$R_4$ représente un atome d'hydrogène ou d'halogène ou un groupe alkyle, alcényle, cycloalkyle, arylalkyle, alcoxy, $CF_3$, NHCO-alkyle, NHCO-aryle, $NHCO_2$-alkyle, NHCHO, $NHSO_2$-alkyle, $NHCONH_2$, $NHSO_2$-aryle, $NHSO_2$-alcényle, NHCONH-alkyle ou $NHCON(alkyl)_2$ et

$R_5$ représente un atome d'hydrogène ou un groupe alkyle ou alcoxy,

les restes hydrocarbonés cités pouvant être substitués par d'autres substituants habituels dans la chimie des colorants azoïques.

**2.** Colorants azoïques selon la revendication 1, dans lesquels

$R_1$ représente un atome d'hydrogène ou Cl ou un groupe alkyle ou alcoxy

$R_2$ représente un groupe alcényle ou un groupe alkyle éventuellement substitué par Cl, CN, $CO_2$-alkyle, aryle, alcoxy, OCO-alkyle, $OCO_2$-alkyle ou OCO-aryle,

$R_3$ représente l'hydrogène ou un groupe $R_2$ préféré identique ou différent,

$R_4$ représente un atome d'hydrogène ou Cl ou un groupe alkyle ou alcoxy ou - en particulier - NHCO-alkyle, NHCO-phényle, $NHCO_2$-alkyle, $NHSO_2$-alkyle ou $NHSO_2$-aryle et

$R_5$ représente un atome d'hydrogène.

**3.** Colorants azoïques selon la revendication 1, dans lesquels

$R_1$ représente H ou Cl ou un groupe alcoxy en $C_1$ ou $C_2$ ou $CH_3$

$R_2$ représente un groupe alcényle en $C_3$-$C_6$ ou un groupe alkyle en $C_1$-$C_6$ éventuellement substitué par OH, Cl, CN, $CO_2$-alkyle en $C_1$ ou $C_2$, phényle, tolyle, chlorophényle, alcoxy en $C_1$-$C_4$, OCO-alkyle en $C_1$-$C_4$, OCO-phényle, OCO-tolyle ou OCO-chlorophényle,

$R_3$ représente H ou un groupe alkyle en $C_1$ -$C_6$ éventuellement substitué par CN, $CO_2$-alkyle en $C_1$ ou $C_2$, phényle, tolyle, chlorophényle, alcoxy en $C_1$-$C_4$, OCO-alkyle en $C_1$-$C_4$, OCO-phényle, OCO-tolyle ou OCO-chlorophényle,

$R_4$ représente H, $CH_3$ ou - en particulier - NHCO-alkyle en $C_1$-$C_4$, NHCO-phényle, NHCO-tolyle, NHCO-chlorophényle, $NHSO_2$-alkyle en $C_1$– $C_4$, $NHSO_2$-$CH_2Cl$, $NHCO_2$-alkyle en $C_1$-$C_4$, $NHSO_2$-phényle, $NHSO_2$-tolyle ou $NHSO_2$-chlorophényle et

$R_5$ représente H.

**4.** Colorants azoïques selon la revendication 1, dans lesquels

$R_1$ représente H ou Cl,

$R_2$ représente un groupe alkyle en $C_1$-$C_4$ éventuellement substitué par CN, $CO_2$-alkyle en $C_1$ ou $C_2$, phényle, tolyle, chlorophényle, alcoxy en $C_1$-$C_4$, OCO-alkyle en $C_1$-$C_4$ ou OCO-phényle,

$R_3$ représente H ou un groupe alkyle en $C_1$-$C_4$ éventuellement substitué par CN, $CO_2$-alkyle, phényle, tolyle, chlorophényle, alcoxy en $C_1$-$C_4$ ou OCO-alkyle en $C_1$-$C_4$,

$R_4$ représente $CH_3$, NHCO-alkyle en $C_1$ -$C_4$, NH-benzoyle ou $NHSO_2$-alkyle en $C_1$-$C_4$ et

$R_5$ représente H.

**5.** Colorants azoïques selon les revendications 1-4, caractérisés en ce que ceux-ci sont exempts de groupes hydrosolubilisants.

**6.** Colorants azoïques selon la revendication 1 de formule

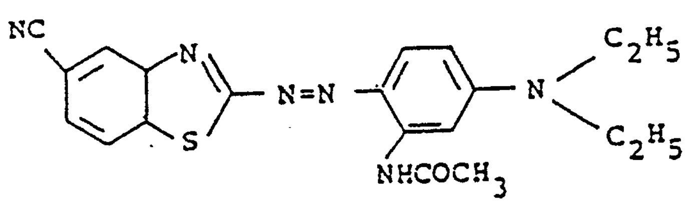

**7.** Colorants azoïques selon les revendications 1-4, caractérisés en ce que ceux-ci contiennent sous la forme acide au moins un groupe hydrosolubilisant, de préférence dans les substituants $R_2$ et $R_3$, en

particulier un groupe des formules $-OSO_3H$, $-SSO_3H$ et de préférence $SO_3H$.

**8.** Procédé pour la teinture de matières organiques, caractérisé en ce que l'on utilise des colorants selon la revendication 1.